# EUROPEAN PATENT SPECIFICATION

(11) **EP 4 294 240 B1**
(45) Date of publication and mention of the grant of the patent: **16.10.2024**
(21) Application number: 22705912.8
(22) Date of filing: 18.02.2022
(51) Int. Cl.: A47J 37/12

(54) **SYSTEM FOR TREATING FOOD PRODUCTS WITH OIL**
SYSTEM ZUR BEHANDLUNG VON LEBENSMITTELN MIT ÖL
SYSTEME DE TRAITEMENT DE PRODUITS ALIMENTAIRES AVEC DE L'HUILE

(30) Priority: 18.02.2021 NL 2027584
(43) Date of publication of application: 27.12.2023
(73) Proprietor: Kiremko B.V., 3417 XJ Montfoort (NL)
(72) Inventor: LUIDINGA, Hartger, 3417 XJ Montfoort (NL); VAN OORSCHOT, Hendrikus Johannis Maria, 3417 XJ Montfoort (NL)
(74) Representative: Algemeen Octrooi- en Merkenbureau B.V.
(86) International application number: PCT/NL2022/050084
(87) International publication number: WO 2022/177429

(56) References cited:
- EP-A1- 2 670 261
- EP-B1- 2 670 261
- US-A1- 2016 157 675
- US-A1- 2017 127 882

## Description

The present invention relates to a system for treating food products with oil, comprising a container for oil which container is provided with a bottom, and a conveying device for conveying food products to be treated through oil in the container in a conveying direction, the conveying device comprising an endless conveyor belt which is wound around deflector rollers which are provided at opposite ends of the system to allow the food products to be situated on a carrying run of the conveyor belt. When using such a treatment system, the food products in the oil rest on a conveyor belt and the food products are conveyed through the oil in a conveying direction by means of this conveyor belt. Such a treatment system is described in the International patent application WO 01/28395 A1. Such treatment systems are intended to be used for food products which have a tendency to sink in the oil. French fries or relatively thick potato slices are examples of such food products. In general, it concerns food products with a specific weight which is greater than the specific weight of the oil. A typical value for the specific weight of oil, at least at the temperature at which it is often used in practice with a system according to the invention is 0.82 kg per liter.

In particular for treating food products with oil whose specific weight is lower than that of the oil, continuous ovens are known in which no conveyor belt is used, but in which the food products float in the oil and are carried along with the oil in the conveying direction by creating a current in the conveying direction in the oil. In this context, the fact that the specific weight of food products decreases during the treatment with the oil may also play a part since moisture may escape from the food products and air-filled spaces may, for example, be created in the food products, as is or at least may be, the case with potato chips, for example. The current in the oil is generated by supplying oil on that side of the container where the food products are introduced into the oil and discharging oil on the opposite side of the container where the food products which have meanwhile been subjected to the treatment with the oil are removed from the oil. In this case, it is known to also use co-rotating immersion belts, paddles, flaps or screws in order to regulate the residence time of the food products in the oil. Publications US 5,085,137, EP 2670261 A1 and US 2017/127882 A1 describe such continuous frying ovens without conveyor belt.

The invention aims to provide a system according to the preamble by means of which food products whose specific weight is greater than that of the oil used are treated in a similar way with the oil while these food products which are situated on a conveyor belt are conveyed through the oil. In this case, the invention is based on the understanding that the occurrence of whirlpools in the oil in the bath has a negative effect on the degree to which food products are treated similarly. The reason for this is that whirlpools may cause individual food products to become temporarily detached from the conveyor belt and to spin around in the bath, as a result of which the residence times of the food products in the bath may differ. The invention is furthermore based on the understanding that there is a relationship between the way in which oil is supplied to the container and the risk of the occurrence of whirlpools. More specifically, the invention is based on the understanding that the way in which oil is supplied to a container, i.e. via a slit-shaped supply passage, is not optimal for preventing whirlpools.

The invention provides a system as claimed in claim 1. By providing the system with a metering device in which an adjustable passage opening is provided for each supply duct via which oil is supplied to the container, a steady supply of oil to each of the supply ducts may be achieved, resulting not only in even heat input across the width of the bath to the oil being improved, but also in the risk of whirlpools being reduced. This consequently benefits the identical treatment of food products through the oil in the bath. It has been found that the occurrence of whirlpools may be prevented, in particular by providing at least one of the supply bodies with two or more supply ducts. The system according to the invention comprises at least two supply bodies which, viewed in the conveying direction, are provided at some distance apart. This way it is possible for the temperature of the oil, viewed in the conveying direction, to be controlled more accurately. Each supply body comprises an elongate collection space whose longitudinal direction extends transversely to the conveying direction and at least two supply ducts. Alternatively, in an embodiment not covered by the appended claims, it is also possible for at least one of the supply bodies to have such an elongate collection space and at least two supply ducts and for at least one of the supply bodies to be of a conventional design.

In a further embodiment, in which at least one of the supply bodies comprise three or more supply ducts, the outlet openings are arranged in a row which, in a further embodiment, extends transversely to the conveying direction. The mutual distance of the outlet openings is preferably between 5 cm and 30 cm.

In a particular embodiment which may have a structural simplicity, the metering device comprises at least one metering body which has a metering passage for each supply duct in which a clear part of a metering passage forms a passage opening and in which the at least one metering body is movable between metering positions with respect to the at least one supply duct for adjusting the size of the at least one passage opening as a function of the metering position used.

The steady supply of oil to the bath is improved if, in an embodiment in which at least one of the supply bodies comprise two or more supply ducts, the sizes of the respective passage openings are identical to each other, irrespective of the metering position used.

In one practical embodiment, the metering body is rotatable about a rotation axis with respect to the at least one supply duct, in which case the rotation axis may extend parallel to the row.

In a further embodiment, the metering body has at least a partly circular, preferably an entirely circular, cross section. Such a metering body may be suitable for rotation.

It may furthermore be preferable if the at least one metering passage extends between two radially opposite sides of the at least partly circular cross section.

In a further embodiment, the metering body is slidable with respect to the at least one supply duct. By sliding the metering body, it is possible to set various metering positions.

In one embodiment, in which at least one of the supply bodies comprises three or more supply ducts and the associated outlet openings are arranged in a row, it may furthermore be preferable for the metering body to be slidable parallel to the row with respect to the at least one supply duct.

A structurally simple embodiment may be achieved if the metering body is strip-shaped. The at least one metering passage therein can readily be created by means of a bore.

For the structural simplicity and the uniform heat input, it may furthermore be helpful if, according to a further embodiment, the container has a width and the length of the collection space is equal to at least 85 % of the magnitude of the width of the container. Thus, the at least one outlet opening can cover the entire or at least virtually the entire width of the container in a simple manner.

Alternatively, it is also possible for the system to comprise two mutually aligned supply bodies. This may be particularly advantageous with relatively wide containers, for example containers having a width greater than 1.5 meters, such as a width of 3 meters. In this case, it is important that the passage openings associated with the respective two, mutually aligned supply bodies are actuated in a similar way, in the sense that the sizes of the passage openings are and remain identical to each other.

In particular for relatively wide containers, it may alternatively also be advantageous if the system comprises two, mutually aligned metering bodies. Also in this case, it is important that the respective metering bodies are actuated in a similar way.

In a further embodiment, the system comprises a servomotor for driving the displacement of the metering body between the metering positions. The use of a servomotor makes it possible to adjust the size of the at least one passage opening and thus of the volume flow of the oil to the container as a function of measurements by sensors which form part of a control circuit of which the servomotor forms part as well. The respective measurements may relate to, for example, the amount of oil in the container, the temperature of the oil in the container and/or the quality of the oil in the container.

The abovementioned advantage may be particularly relevant if the outlet openings associated with at least one, preferably each, of the at least two supply bodies are provided at a distance from opposite ends of the bottom, viewed in the conveying direction, for example in the area situated between 25% and 75% of the distance between aforementioned ends.

The risk of the occurrence of whirlpools in the oil can also be reduced if the discharge device comprises at least one discharge opening in the bottom of the container and at least one discharge line which is connected to the at least one discharge opening.

In order to further control the temperature of the oil, it may be advantageous if the discharge device comprises at least two discharge openings in the bottom of the container, which at least two discharge openings are provided at a distance apart, viewed in the conveying direction, in particular if the at least two discharge openings in the bottom of the container which are provided at a distance apart, viewed in the conveying direction, are also provided at a distance from opposite ends of the bottom.

In a further embodiment of the system, a discharge opening is provided upstream of at least one of the outlet openings, viewed in the conveying direction, in order to prevent oil which has just been supplied to the container from immediately being discharged by the discharge device.

The invention will be explained in more detail by means of the description of possible embodiments of a system according to the invention with reference to the following figures, in which:
Fig. 1a shows a diagrammatic side view of a system according to the invention for treating food products with oil;
Fig. 1b diagrammatically shows a top view of the system from Fig. 1a;
Fig. 2a diagrammatically shows a side view of a part of a supply device of a system according to the invention;
Fig. 2b diagrammatically shows a top view of a supply device of the system from Fig. 2a;
Fig. 3a diagrammatically shows a partially cut-away front view of an embodiment of a metering device as usable with a system according to the preceding figures;
Fig. 3b shows cross section Illb - Illb in Fig. 3a;
Fig. 4a diagrammatically shows a partially cut-away front view of an alternative embodiment of a metering device;
Fig. 4b shows cross section IVb - IVb in Fig. 4a.

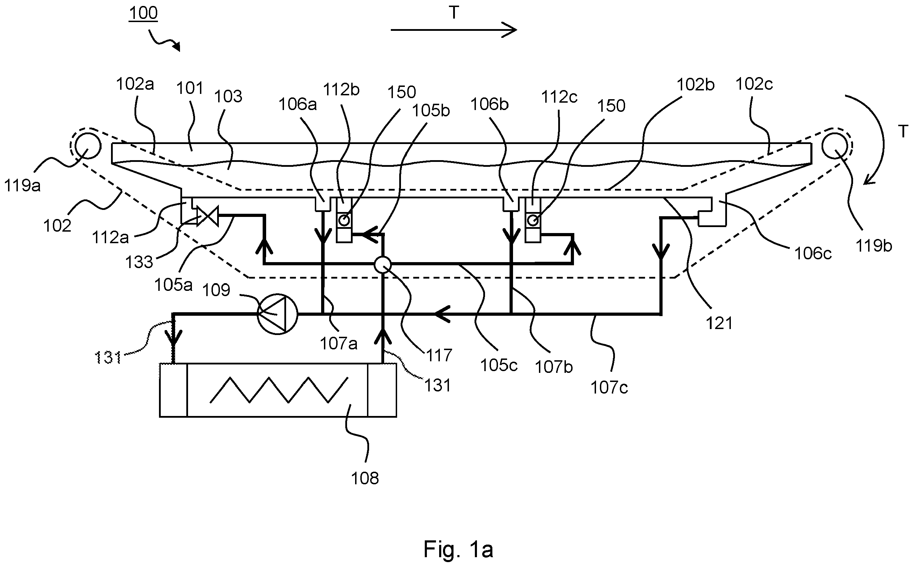

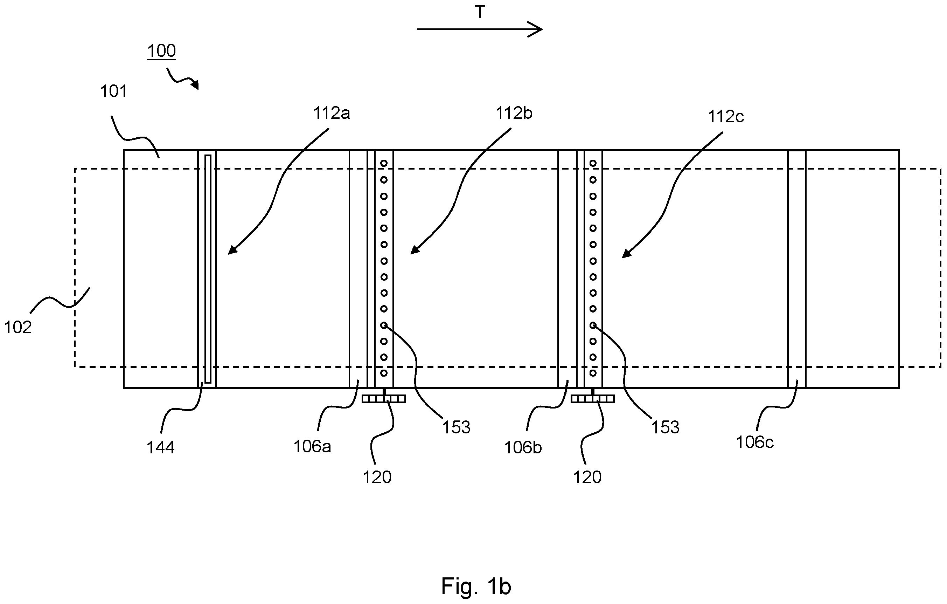

Figs. 1a and 1b show a system 100 for treating food products with oil 103, such as potato slices or French fries, whose specific weight is greater than that of the oil 103. The respective food products therefore have a tendency to sink in the oil 103.

The system 100 comprises a container configured as a deep-frying pan 101 with bottom 121 for the oil 103 and a conveying device with an endless conveyor belt 102 which is, inter alia, wound around deflector rollers 119a, 119b which are provided at opposite ends of the system 100. The carrying run of the conveyor belt 102 extends downwardly inclined in an upstream part 102a, horizontally in a central part 102b and upwardly inclined in a downstream part 102c. The central part 102b is covered entirely by the oil 103. The respective top ends of the upstream part 102a and the downstream part 102c are situated above the level of the oil 103. By means of the conveying device, food products to be treated with the oil 103 by suitably rotatably driving at least one of the deflector rollers 119a, 119b can be conveyed through the oil 103 in the deep-frying pan 101 in a conveying direction T, with the respective products being situated on the carrying run of the conveyor belt 102.

The system 100 furthermore comprises a circulation system for the oil 103. This circulation system comprises a pipe system for the oil 103 which is connected to the deep-frying pan 101 and comprises a circulation pump 109. Together with the circulation pump 109, the part of the circulation system situated on the upstream side of the circulation pump 109 forms a discharge device for discharging oil 103 from the deep-frying pan 101. Together with the circulation pump 109, the part of the circulation system situated on the upstream side of the circulation pump 109 forms a supply device for supplying oil 103 to the deep-frying pan.

The discharge device comprises discharge lines 107a, 107b and 107c via which oil 103 is discharged from the deep-frying pan 101 in the direction of the pump 109 via respectively discharge openings 106a, 106b and 106c in the bottom 121. The discharge device furthermore comprises a filter system (not shown) which is known per se to a person skilled in the art and serves to filter the oil 103 coming from the deep-frying pan 101. In the present embodiment, the discharge openings 106a, 106b, 106c are respectively situated at approximately 1/3, 2/3 and near the downstream end of the length of the deep-frying pan 101. The respective downstream ends of discharge lines 107a and 107b are connected to the discharge line 107c. In general, the discharge openings are provided at, at least substantially, equal distances from one another, irrespective of their number.

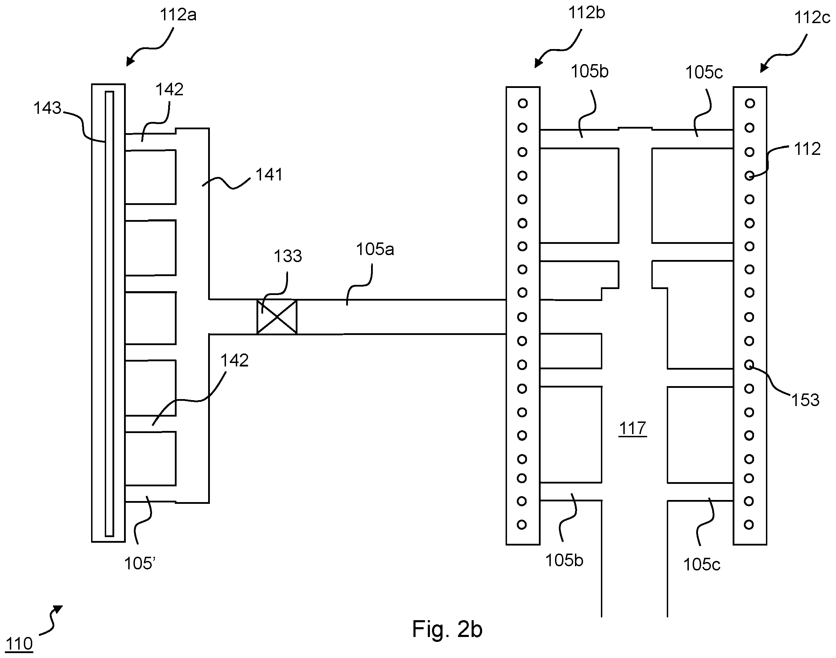

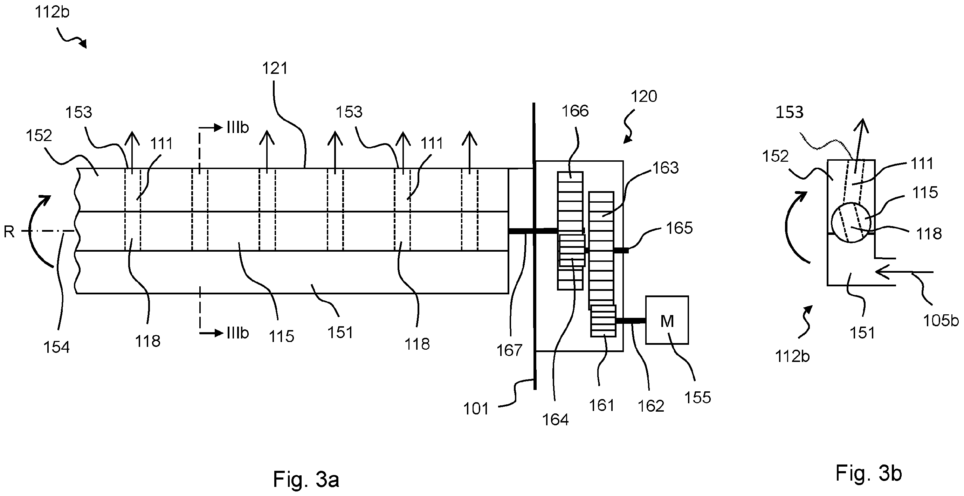

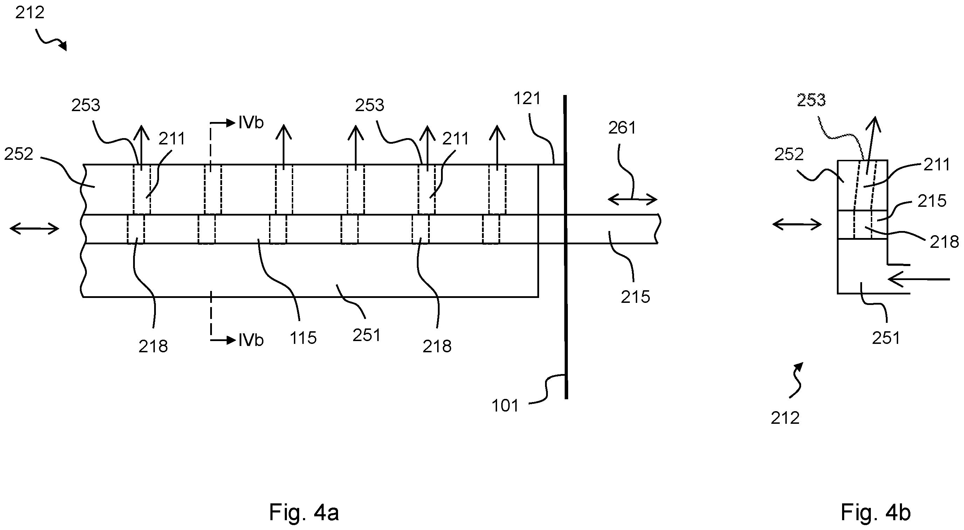

The supply device comprises a supply line 131 which extends between the pump 109 and manifold 117. A continuous flow heating device 108 is incorporated in the supply line 131 for heating oil 103 which flows through the supply line 131. The supply device furthermore comprises supply lines 105a, 105b and 105c which extend between on the one hand the manifold 117 and on the other hand metering devices 112a, 112b and 112c, respectively. As can be seen in Fig. 2B, there are four supply lines 105b and four supply lines 105c in total. Metering device 112a is of a different type to metering devices 112b and 112c. The metering devices 112b and 112c are of particular importance for the present invention and two possible embodiments of such metering devices will be described in more detail below by means of Figs. 3 and 4. As regards metering device 112a, it should be noted that a control valve 133 is incorporated which is known per se to a person skilled in the art at the downstream end of the supply line 105a towards metering device 112a. As is the case for the discharge openings, the metering devices are generally provided at, at least substantially, equal distances from one another. Incidentally, it may also be the case that the number of metering devices deviates from the number of discharge openings and is, for example, greater than the latter.

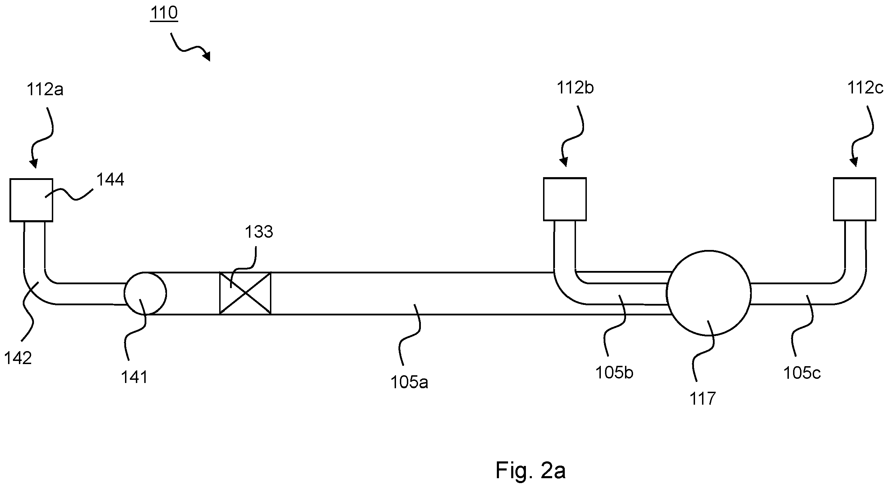

The metering device 112a comprises a distribution pipe 141 (see also Figs. 2a and 2b) which extends across virtually the entire width of the deep-frying pan 101 and from which six further supply lines 142 extend in the present embodiment. Alternatively, the latter number could also be greater or smaller, for example two or greater and ten or smaller. The mutual distance is preferably between 20 cm and 40 cm, for example 30 cm. The supply lines 142 end in a pressure space 144 which is provided with an upwardly directed slit-shaped outlet opening 143 at the top side and, by means of this outlet opening 143, end in the bottom 121 of the deep-frying pan 101, more specifically on the upstream side thereof, so that the food products may experience the efficiency of the oil 103 which has been supplied to the deep-frying pan 101 via outlet openings 143 immediately after they have been immersed in the oil 103 in the deep-frying pan 101. The amount of oil 103 which is supplied to the deep-frying pan 101 via the outlet opening 143 is controlled by adjusting control valve 133.

Fig. 3a shows metering device 112b in more detail. Metering device 112c is of a similar design to metering device 112b. Metering device 112b has an elongate collection space 151 which extends at right angles to the conveying direction T in the horizontal direction and the magnitude of the length of which is virtually equal to the magnitude of the width of the deep-frying pan 101. The four supply lines 105b end in the collection space 151 at equal distances from one another, so that oil 103 can be supplied to the collection space 151 via the supply lines 105b evenly distributed along the length of the collection space 151.

Directly above collection space 151, metering device 112b furthermore comprises an elongate outlet body 152 which is rigidly connected to collection space 151 and in which discharge ducts 111 are provided which run parallel to each other and which are equidistant to each other. The top ends of the discharge ducts 111 end in the deep-frying pan 101 at outlet openings 153 which coincide with the bottom 121 of the deep-frying pan 101. The outlet openings 153 are evenly distributed and form a row which extends transversely to the conveying direction T and across virtually the entire width of the deep-frying pan 101. Outlet openings 153 are furthermore provided at a short distance from and downstream of discharge opening 106a or 106b.

An at least substantially cylindrical space is provided between the collection space 151 and the outlet body 152, which space extends along the entire length of the collection space 151. In this space, a cylindrical metering body 115 with an axis 154 is provided. Metering ducts 118 which extend through metering body 115 transversely to the central axis 154 of metering body 115 are provided at a mutual distance which is identical to that of discharge ducts 111 in metering body 115. The shape of the cross sections and the diameter of the metering ducts 118 are identical to those of discharge ducts 111. For the part where the top ends of the metering ducts 118 overlap the bottom ends of the associated discharge ducts, the top ends of the metering ducts 118 form passage openings for oil 103.

The metering body 115 is rotatable about central axis 154 and may to this end be driven by servomotor 155 via geared transmission 120 or, optionally, manually in an embodiment without servomotor 155 and optionally without transmission 120. The geared transmission 120 comprises gear wheel 161 on output shaft 162 of servomotor 155. The use of a servomotor offers the possibility to automatically control the speed with which oil 103 is supplied to the deep-frying pan 101, depending on the desired supply of oil 103 to the deep-frying pan 101, for example on the basis of measurements of the quality and/or temperature of the oil in the deep-frying pan 101.

Gear wheel 161 is in engagement with gear wheel 163 and both are provided so as to be rotatable on shaft 165 together with gear wheel 164. Gear wheel 164 is in engagement with gear wheel 166 which is rigidly connected with shaft 167. Shaft 167 is rigidly connected to metering body 115. Suitable excitation of servomotor 155 may thus rotate the metering body through a desired angle.

The cross section from Fig. 3b shows how rotation of the metering body 115 results in the top ends of metering ducts 118 adjoining the bottom ends of discharge ducts 111 in such a way that, in a full through-flow position, the metering ducts 118 adjoin discharge ducts 111 completely. In that case, the sizes of the passage openings are thus equal to the size of the cross sections of the metering ducts 118. In a completely closed position, the metering ducts 118 do not adjoin discharge ducts 111 at all, so no oil 103 from collection space 151 is able to reach the discharge ducts 111. The size of the passage openings then thus equals zero. By positioning the metering body 115 in metering positions of the metering body 115 between said full flow-through position and the fully closed position by means of suitable excitation of servomotor 155, the amount of oil 103 which is able to reach the discharge ducts 111 from the collection space 151 can be metered. Depending on the continuously variable metering position, the size of the passage openings thus lies between zero and the size of the cross sections of the metering ducts 118.

Figs. 4a and 4b show an alternative metering device 212 which is similar to metering device 112b. In the following, in particular the differences with metering device 112b will be discussed in more detail.

Metering device 212 comprises an elongate collection space 251 to which supply lines like supply lines 105b (not shown in Figs. 4a and 4b) are connected for supplying oil 103 to the collection space 251. Directly above collection space 251, the metering device 212 furthermore comprises an elongate outlet body 252 which is rigidly connected to collection space 251 and in which discharge ducts 211 are provided which run parallel to each other. The top ends of the discharge ducts 211 end at outlet openings 253 which coincide with the bottom 121 of the deep-frying pan 101.

Between the collection space 251 and the outlet body 252, a rectangular space is provided with extends along the entire length of the collection space 251 and contains a strip-shaped metering body 215. Metering ducts 218 are provided in metering body 215 at a similar mutual distance to that of discharge ducts 211. The shape of the cross sections and the diameter of the metering ducts 218 are identical to those of discharge ducts 211.

The metering body 215 is slidable in a reciprocating manner along double arrow 261 by means of a servomotor (not shown). Alternatively, this could also be achieved by means of an actuator motor or a pneumatic or mechanical adjustment means which may or may not be operated manually. The cross section from Fig. 4b shows how it is possible to cause the top ends of metering ducts 218 to adjoin the bottom ends of discharge ducts 211 by sliding the metering body 215 in such a way that, in a full flow-through position, the metering ducts 218 fully adjoin the discharge ducts 211 and that, in a completely closed position, the metering ducts 218 do not adjoin discharge ducts 211 at all, so that no oil 103 from collection space 251 is able to reach the discharge ducts 211. By positioning the metering body 215 in positions of the metering body 215 between said full flow-through position and the fully closed position, it is possible to meter the amount of oil 103 which is able to reach the discharge ducts 211 from collection space 251.

The use of metering devices such as metering devices 112a, 112b and 212 contributes to a uniform distribution of the supply of oil 103 to the deep-frying pan 101 across its width, also irrespective of the pressure prevailing in the pressure chamber 151 or 251. In this way, the occurrence of whirlpools in the oil 103 in the deep-frying pan 101 can be counteracted and, in addition, uniform heat input to the oil 103 in the deep-frying pan 101 is improved, as a result of which the individual food products which are conveyed through the oil 103 in the deep-frying pan 101 by means of the conveyor and which are situated on the conveyor belt 102 are given the same treatment, partly due to the identical residence time in the oil 103.

The invention is not limited to the above-described embodiments but its scope is defined by the appended claims. In an alternative embodiment, it is for example possible for a metering device to comprise two metering bodies instead of one single metering body, which two metering bodies are mutually aligned and are actuated in a similar way, for example by two synchronized drive means. Such an embodiment may be particularly advantageous with relatively wide deep-frying pans, for example 2 meters or even 3 meters wide. If for example a cylindrical metering body such as metering body 115 were to have a length of 3 meters, there is a risk of adverse torsion phenomena occurring.

In a further alternative embodiment, the deep-frying pan may be shorter than the deep-frying pan 101 in the embodiment from Fig. 1a. In this case, there is only a single metering device instead of two metering devices 112a, 112b and there is only a single combination of a discharge opening and a discharge line instead of two such combinations, such as the combinations of a discharge opening 106a, 106b and a discharge line 107a, 107b. A discharge opening such as discharge opening 106c of such an alternative embodiment would then be situated at the position of discharge opening 106b in Fig. 1a, for example.

The invention may be used in a particularly suitable way in treating potato products with oil, but other types of food products, such as for example peanuts and fish products or meat products, may also be treated advantageously with oil by means of a system according to the invention.

## Claims

1. A system (100) for treating food products with oil (103), comprising
- a container (101) for oil which container (101) is provided with a bottom (121),
- a conveying device for conveying food products to be treated through oil in the container (101) in a conveying direction (T), the conveying device comprising an endless conveyor belt (102) which is wound around deflector rollers (119a, 119b) which are provided at opposite ends of the system (100) to allow the food products to be situated on a carrying run of the conveyor belt,
- a supply device (109, 131, 105a, 105b, 105c) for supplying oil (103) to the container (101),
- a discharge device (109, 107a, 107b, 107c) for discharging oil (103) from the container (101),
- a heating device (108) for heating the oil, the supply device (109, 131, 105a, 105b, 105c) comprising
- at least two supply bodies which, viewed in the conveying direction (T), are provided at some distance apart, each supply body comprising
- an elongate collection space (151; 251) for the oil (103) in which the longitudinal direction of the collection space extends transversely to the conveying direction (T), and
- at least two supply ducts (111; 211) in which each supply duct, on a respective upstream side thereof, adjoins the collection space (151; 251) and, on a respective downstream side thereof, ends in the bottom (121) of the container (101) via an outlet opening (153; 253) of the respective supply duct,
- a pump (109) for supplying oil (103) heated by the heating device (108) to the collection space (151; 251), and
- a metering device (112b, 112c; 212) for metering the amount of oil (103) which is supplied to the outlet openings (153; 253),
wherein the metering device (112b, 112c; 212) has a passage opening for each supply duct (111; 211) which is provided between the respective supply duct (111; 211) and the collection space (151; 251), via which passage opening oil (103) can flow from the collection space (151; 251) into the supply ducts, and wherein the size of each passage opening is adjustable.

2. The system as claimed in claim 1, wherein the outlet openings (153; 253) are arranged in a row which row preferably extends in the horizontal direction and transversely to the conveying direction (T).

3. The system as claimed in one of the preceding claims, wherein the metering device comprises at least one metering body (115; 215) which has a metering passage (118; 218) for each supply duct (111; 211), in which a clear part of a metering passage forms a passage opening and in which the at least one metering body is movable between metering positions with respect to the at least one supply duct for adjusting the size of the at least one passage opening as a function of the metering position, wherein preferably, irrespective of the metering position used, the sizes of the respective passage openings are identical to each other and/or wherein preferably the metering body (115) is rotatable about a rotation axis (R) with respect to the at least one supply duct (111).

4. The system as claimed in claim 2, wherein the metering device comprises at least one metering body (115) which has a metering passage (118) for each supply duct (111), in which a clear part of a metering passage forms a passage opening and in which the at least one metering body is movable between metering positions with respect to the at least one supply duct for adjusting the size of the at least one passage opening as a function of the metering position wherein the metering body is rotatable about a rotation axis with respect to the at least one supply duct and wherein the rotation axis extends parallel to the row.

5. The system as claimed in claim 3 or 4, wherein the metering body (115) has at least a partly circular, preferably an entirely circular, cross section, wherein preferably the at least one metering passage (118) extends between two radially opposite sides of the at least partly circular cross section.

6. The system as claimed in claim 3, wherein the metering body (215) is slidable with respect to the at least one supply duct, wherein the metering body (215) preferably is strip-shaped..

7. The system as claimed in claim 2 and as claimed in claim 6, wherein the metering body (215) is slidable parallel to the row with respect to the at least one supply duct (211), wherein preferably the metering body (215) is strip-shaped.

8. The system as claimed in one of the preceding claims, wherein the container (101) has a width and the length of the collection space is equal to at least 85% of the magnitude of the width of the container (101).

9. The system as claimed in one of the claims 1 to 17, wherein the system comprises two mutually aligned supply bodies.

10. The system as claimed in claim 3, wherein the system comprises two mutually aligned metering bodies (115; 215).

11. The system as claimed in claim 3, wherein the system has a servomotor (155) for driving the displacement of the at least one metering body between the metering positions.

12. The system as claimed in one of the preceding claims, wherein the outlet openings (153; 253) associated with at least one, preferably each, of the at least two supply bodies are provided at a distance from opposite ends of the bottom (121), viewed in the conveying direction (T).

13. The system as claimed in one of the preceding claims, wherein the discharge device comprises at least one discharge opening (106a, 106b) in the bottom (121) of the container (101) and at least one discharge line (107a, 107b) which is connected to the at least one discharge opening, wherein preferably the discharge device comprises at least two discharge openings in the bottom (121) of the container (101), which at least two discharge openings are provided at a distance apart, viewed in the conveying direction and/or wherein further preferably the at least two discharge openings in the bottom (121) of the container (101) which are provided at a distance apart, viewed in the conveying direction, are also provided at a distance from opposite ends of the bottom (121).

14. The system as claimed in claim 13, wherein a discharge opening is provided upstream of at least one of the outlet openings, viewed in the conveying direction (T).

15. The system as claimed in claim 12, wherein the outlet openings (153; 253) associated with at least one, preferably each, of the at least two supply bodies are provided in the area situated between 25% and 75% of the distance between the opposite ends.

## Patentansprüche

1. Ein System (100) zur Behandlung von Lebensmitteln mit Öl (103), beinhaltend
- einen Behälter (101) für Öl, wobei der Behälter (101) mit einem Boden (121) bereitgestellt ist,
- eine Fördervorrichtung zum Befördern von zu behandelnden Lebensmitteln durch Öl in dem Behälter (101) in einer Förderrichtung (T), wobei die Fördervorrichtung ein Endlosförderband (102) beinhaltet, das um Umlenkrollen (119a, 119b) gewunden ist, die an entgegengesetzten Enden des Systems (100) bereitgestellt sind, um zu ermöglichen, dass sich die Lebensmittel auf einem Obertrum des Förderbands befinden,
- eine Zuführvorrichtung (109, 131, 105a, 105b, 105c) zum Zuführen von Öl (103) zu dem Behälter (101),
- eine Abführvorrichtung (109, 107a, 107b, 107c) zum Abführen von Öl (103) aus dem Behälter (101),
- eine Erhitzungsvorrichtung (108) zum Erhitzen des Öls, wobei die Zuführvorrichtung (109, 131, 105a, 105b, 105c) Folgendes beinhaltet:
- mindestens zwei Zuführkörper, die, in der Förderrichtung (T) betrachtet, in einigem Abstand voneinander bereitgestellt sind, wobei jeder Zuführkörper Folgendes beinhaltet:
- einen länglichen Sammelraum (151; 251) für das Öl (103), wobei sich die Längsrichtung des Sammelraums quer zu der Förderrichtung (T) erstreckt, und
- mindestens zwei Zuführkanäle (111; 211), wobei jeder Zuführkanal auf einer jeweiligen stromaufwärtigen Seite davon an den Sammelraum (151; 251) angrenzt und auf einer jeweiligen stromabwärtigen Seite davon via eine Auslassöffnung (153; 253) des jeweiligen Zuführkanals in dem Boden (121) des Behälters (101) endet,
- eine Pumpe (109) zum Zuführen von Öl (103), das durch die Erhitzungsvorrichtung (108) erhitzt wird, zu dem Sammelraum (151; 251), und
- eine Dosiervorrichtung (112b, 112c; 212) zum Dosieren der Menge an Öl (103), die den Auslassöffnungen (153; 253) zugeführt wird,
wobei die Dosiervorrichtung (112b, 112c; 212) eine Durchgangsöffnung für jeden Zuführkanal (111; 211) aufweist, die zwischen dem jeweiligen Zuführkanal (111; 211) und dem Sammelraum (151; 251) bereitgestellt ist, wobei Öl (103) von dem Sammelraum (151; 251) durch die Durchgangsöffnung in die Zuführkanäle fließen kann und wobei die Größe jeder Durchgangsöffnung einstellbar ist.

2. System nach Anspruch 1, wobei die Auslassöffnungen (153; 253) in einer Reihe eingerichtet sind, wobei sich die Reihe vorzugsweise in der horizontalen Richtung und quer zu der Förderrichtung (T) erstreckt.

3. System nach einem der vorhergehenden Ansprüche, wobei die Dosiervorrichtung mindestens einen Dosierkörper (115; 215) beinhaltet, der einen Dosierdurchgang (118; 218) für jeden Zuführkanal (111; 211) aufweist, wobei ein freier Teil eines Dosierdurchgangs eine Durchgangsöffnung bildet und wobei der mindestens eine Dosierkörper mit Bezug auf den mindestens einen Zuführkanal zwischen Dosierpositionen bewegbar ist, um die Größe der mindestens einen Durchgangsöffnung in Abhängigkeit von der Dosierposition einzustellen, wobei vorzugsweise ungeachtet der verwendeten Dosierposition die Größen der jeweiligen Durchgangsöffnungen zueinander identisch sind und/oder wobei vorzugsweise der Dosierkörper (115) mit Bezug auf den mindestens einen Zuführkanal (111) um eine Drehachse (R) drehbar ist.

4. System nach Anspruch 2, wobei die Dosiervorrichtung mindestens einen Dosierkörper (115) beinhaltet, der einen Dosierdurchgang (118) für jeden Zuführkanal (111) aufweist, wobei ein freier Teil eines Dosierdurchgangs eine Durchgangsöffnung bildet und wobei der mindestens eine Dosierkörper mit Bezug auf den mindestens einen Zuführkanal zwischen Dosierpositionen bewegbar ist, um die Größe der mindestens einen Durchgangsöffnung in Abhängigkeit von der Dosierposition einzustellen, wobei der Dosierkörper mit Bezug auf den mindestens einen Zuführkanal um eine Drehachse drehbar ist und wobei sich die Drehachse parallel zu der Reihe erstreckt.

5. System nach Anspruch 3 oder 4, wobei der Dosierkörper (115) einen mindestens teilweise kreisförmigen, vorzugsweise komplett kreisförmigen, Querschnitt aufweist, wobei sich der mindestens eine Dosierdurchgang (118) vorzugsweise zwischen zwei radial entgegengesetzten Seiten des mindestens teilweise kreisförmigen Querschnitts erstreckt.

6. System nach Anspruch 3, wobei der Dosierkörper (215) mit Bezug auf den mindestens einen Zuführkanal verschiebbar ist, wobei der Dosierkörper (215) vorzugsweise leistenförmig ist.

7. System nach Anspruch 2 und Anspruch 6, wobei der Dosierkörper (215) mit Bezug auf den mindestens einen Zuführkanal (211) parallel zu der Reihe verschiebbar ist, wobei der Dosierkörper (215) vorzugsweise leistenförmig ist.

8. System nach einem der vorhergehenden Ansprüche, wobei der Behälter (101) eine Breite aufweist und die Länge des Sammelraums mindestens 85 % des Werts der Breite des Behälters (101) beträgt.

9. System nach einem der Ansprüche 1 bis 17, wobei das System zwei zueinander ausgerichtete Zuführkörper beinhaltet.

10. System nach Anspruch 3, wobei das System zwei zueinander ausgerichtete Dosierkörper (115; 215) beinhaltet.

11. System nach Anspruch 3, wobei das System einen Servomotor (155) zum Antreiben der Bewegung des mindestens einen Dosierkörpers zwischen den Dosierpositionen aufweist.

12. System nach einem der vorhergehenden Ansprüche, wobei die Auslassöffnungen (153; 253), die mit mindestens einem, vorzugsweise jedem, der mindestens zwei Zuführkörper assoziiert sind, in der Förderrichtung (T) betrachtet in einem Abstand von entgegengesetzten Enden des Bodens (121) bereitgestellt sind.

13. System nach einem der vorhergehenden Ansprüche, wobei die Abführvorrichtung mindestens eine Abführöffnung (106a, 106b) in dem Boden (121) des Behälters (101) und mindestens eine Abführleitung (107a, 107b), die mit der mindestens einen Abführöffnung verbunden ist, beinhaltet, wobei die Abführvorrichtung vorzugsweise mindestens zwei Abführöffnungen in dem Boden (121) des Behälters (101) beinhaltet, wobei die mindestens zwei Abführöffnungen in der Förderrichtung betrachtet in einem Abstand voneinander bereitgestellt sind und/oder wobei die mindestens zwei Abführöffnungen in dem Boden (121) des Behälters (101), die in der Förderrichtung betrachtet in einem Abstand voneinander bereitgestellt sind, ferner vorzugsweise auch in einem Abstand von entgegengesetzten Enden des Bodens (121) bereitgestellt sind.

14. System nach Anspruch 13, wobei in der Förderrichtung (T) betrachtet eine Abführöffnung stromaufwärts von mindestens einer der Auslassöffnungen bereitgestellt ist.

15. System nach Anspruch 12, wobei die Auslassöffnungen (153; 253), die mit mindestens einem, vorzugsweise jedem, der mindestens zwei Zuführkörper assoziiert sind, in dem Bereich bereitgestellt sind, der sich zwischen 25 % und 75 % des Abstands zwischen den entgegengesetzten Enden befindet.

## Revendications

1. Système (100) de traitement de produits alimentaires avec de l'huile (103), comprenant
- un récipient (101) pour l'huile, lequel récipient (101) est pourvu d'un fond (121),
- un dispositif de transport pour transporter des produits alimentaires à traiter à travers l'huile dans le récipient (101) dans une direction de transport (T), le dispositif de transport comprenant une courroie transporteuse sans fin (102) qui est enroulée autour de rouleaux de renvoi (119a, 119b) qui sont prévus à des extrémités opposées du système (100) pour permettre aux produits alimentaires d'être situés sur un brin supérieur de la courroie transporteuse,
- un dispositif d'alimentation (109, 131, 105a, 105b, 105c) pour alimenter en huile (103) le récipient (101),
- un dispositif d'évacuation (109, 107a, 107b, 107c) pour évacuer l'huile (103) du récipient (101),
- un dispositif de chauffage (108) pour chauffer l'huile,
le dispositif d'alimentation (109, 131, 105a, 105b, 105c) comprenant
- au moins deux corps d'alimentation qui, vus dans la direction de transport (T), sont prévus à une certaine distance l'un de l'autre, chaque corps d'alimentation comprenant
- un espace de collecte allongé (151 ; 251) pour l'huile (103) dans lequel la direction longitudinale de l'espace de collecte s'étend transversalement à la direction de transport (T), et
- au moins deux conduits d'alimentation (111 ; 211) dans lesquels chaque conduit d'alimentation, sur un côté amont respectif de celui-ci, est contigu à l'espace de collecte (151 ; 251) et, sur un côté aval respectif de celui-ci, se termine dans le fond (121) du récipient (101) par une ouverture de sortie (153 ; 253) du conduit d'alimentation respectif,
- une pompe (109) pour alimenter en huile (103) chauffée par le dispositif de chauffage (108) l'espace de collecte (151 ; 251), et
- un dispositif de dosage (112b, 112c ; 212) pour doser la quantité d'huile (103) qui alimente les ouvertures de sortie (153 ; 253),
dans lequel le dispositif de dosage (112b, 112c ; 212) présente pour chaque conduit d'alimentation (111 ; 211) une ouverture de passage qui est prévue entre le conduit d'alimentation respectif (111 ; 211) et l'espace de collecte (151 ; 251), par laquelle ouverture de passage l'huile (103) peut s'écouler de l'espace de collecte (151 ; 251) dans les conduits d'alimentation, et dans lequel la taille de chaque ouverture de passage est réglable.

2. Système tel que revendiqué dans la revendication 1, dans lequel les ouvertures de sortie (153 ; 253) sont agencées en une rangée, laquelle rangée s'étend de préférence dans la direction horizontale et transversalement à la direction de transport (T).

3. Système tel que revendiqué dans l'une des revendications précédentes, dans lequel le dispositif de dosage comprend au moins un corps de dosage (115 ; 215) qui présente un passage de dosage (118 ; 218) pour chaque conduit d'alimentation (111 ; 211), dans lequel une partie libre d'un passage de dosage forme une ouverture de passage et dans lequel l'au moins un corps de dosage est mobile entre des positions de dosage par rapport à l'au moins un conduit d'alimentation pour régler la taille de l'au moins une ouverture de passage en fonction de la position de dosage, dans lequel de préférence, indépendamment de la position de dosage utilisée, les tailles des ouvertures de passage respectives sont identiques entre elles et/ou dans lequel de préférence le corps de dosage (115) est rotatif autour d'un axe de rotation (R) par rapport à l'au moins un conduit d'alimentation (111).

4. Système tel que revendiqué dans la revendication 2, dans lequel le dispositif de dosage comprend au moins un corps de dosage (115) qui présente un passage de dosage (118) pour chaque conduit d'alimentation (111), dans lequel une partie libre d'un passage de dosage forme une ouverture de passage et dans lequel l'au moins un corps de dosage est mobile entre des positions de dosage par rapport à l'au moins un conduit d'alimentation pour régler la taille de l'au moins une ouverture de passage en fonction de la position de dosage, dans lequel le corps de dosage est rotatif autour d'un axe de rotation par rapport à l'au moins un conduit d'alimentation et dans lequel l'axe de rotation s'étend parallèlement à la rangée.

5. Système tel que revendiqué dans la revendication 3 ou 4, dans lequel le corps de dosage (115) présente une section transversale au moins partiellement circulaire, de préférence entièrement circulaire, dans lequel de préférence l'au moins un passage de dosage (118) s'étend entre deux côtés radialement opposés de la section transversale au moins partiellement circulaire.

6. Système tel que revendiqué dans la revendication 3, dans lequel le corps de dosage (215) peut coulisser par rapport à l'au moins un conduit d'alimentation, dans lequel le corps de dosage (215) est de préférence en forme de bande.

7. Système tel que revendiqué dans la revendication 2 et tel que revendiqué dans la revendication 6, dans lequel le corps de dosage (215) peut coulisser parallèlement à la rangée par rapport à l'au moins un conduit d'alimentation (211), dans lequel de préférence le corps de dosage (215) est en forme de bande.

8. Système tel que revendiqué dans l'une des revendications précédentes, dans lequel le récipient (101) présente une largeur et la longueur de l'espace de collecte est égale à au moins 85% de la grandeur de la largeur du récipient (101).

9. Système tel que revendiqué dans l'une des revendications 1 à 7, dans lequel le système comprend deux corps d'alimentation mutuellement alignés.

10. Système tel que revendiqué dans la revendication 3, dans lequel le système comprend deux corps de dosage mutuellement alignés (115 ; 215).

11. Système tel que revendiqué dans la revendication 3, dans lequel le système a un servomoteur (155) pour entraîner le déplacement de l'au moins un corps de dosage entre les positions de dosage.

12. Système tel que revendiqué dans l'une des revendications précédentes, dans lequel les ouvertures de sortie (153 ; 253) associées à au moins l'un, de préférence chacun, des au moins deux corps d'alimentation sont prévues à une distance des extrémités opposées du fond (121), vues dans la direction de transport (T).

13. Système tel que revendiqué dans l'une des revendications précédentes, dans lequel le dispositif d'évacuation comprend au moins une ouverture d'évacuation (106a, 106b) dans le fond (121) du récipient (101) et au moins une conduite d'évacuation (107a, 107b) qui est raccordée à l'au moins une ouverture d'évacuation, dans lequel de préférence le dispositif d'évacuation comprend au moins deux ouvertures d'évacuation dans le fond (121) du récipient (101), lesquelles au moins deux ouvertures d'évacuation sont prévues à une distance l'une de l'autre, vues dans la direction de transport et/ou dans lequel de préférence encore les au moins deux ouvertures d'évacuation dans le fond (121) du récipient (101) qui sont prévues à une distance l'une de l'autre, vues dans la direction de transport, sont également prévues à une distance des extrémités opposées du fond (121).

14. Système tel que revendiqué dans la revendication 13, dans lequel une ouverture d'évacuation est prévue en amont d'au moins l'une des ouvertures de sortie, vues dans la direction de transport (T).

15. Système tel que revendiqué dans la revendication 12, dans lequel les ouvertures de sortie (153 ; 253) associées à au moins l'un, de préférence chacun, des au moins deux corps d'alimentation sont prévues dans la zone située entre 25% et 75% de la distance entre les extrémités opposées.
